# EUROPÄISCHE PATENTSCHRIFT

(11) **EP 1 671 030 B1**
(45) Veröffentlichungstag und Bekanntmachung des Hinweises auf die Patenterteilung: **28.11.2012**
(21) Anmeldenummer: 04790164.0
(22) Anmeldetag: 07.10.2004
(51) Int. Cl.: F03D 1/06

(54) **ROTORBLATT FÜR EINE WINDKRAFTANLAGE**
ROTOR BLADE FOR A WIND POWER CONVERTER
PALE DE ROTOR POUR UNE ÉOLIENNE

(30) Priorität: 10.10.2003 DE 10347802
(43) Veröffentlichungstag der Anmeldung: 21.06.2006
(73) Patentinhaber: REpower Systems SE, 22335 Hamburg (DE)
(72) Erfinder: QUELL, Peter, 24783 Osterrönfeld (DE); PETSCHE, Marc, 24809 Nübbel (DE)
(74) Vertreter: Emmel, Thomas
(86) Internationale Anmeldenummer: PCT/EP2004/011187
(87) Internationale Veröffentlichungsnummer: WO 2005/035978

(56) Entgegenhaltungen:
- EP-A- 1 219 837
- DE-A- 2 135 287
- GB-A- 840 543
- GB-A- 2 374 331
- RU-C- 2 218 477
- US-A- 1 446 011
- US-A- 2 361 676

## Beschreibung

Die vorliegende Erfindung betrifft ein Rotorblatt für eine Windkraftanlage mit einer Einrichtung zur Optimierung der Umströmung nach dem Oberbegriff des Anspruchs 1.

Windkraftanlagen weisen einen Rotor mit einem oder mehreren Rotorblättern auf. Jedes der Rotorblätter weist ein Profil mit einer im wesentlichen von der Blattwurzel nach außen zur Blattspitze abnehmenden relativen Dicke auf. Das Profil ist so geformt, dass eine Saug- und eine Druckseite ausgebildet wird, so dass bei Umströmumg mit bewegter Luft auf der Saugseite gegenüber der Druckseite ein Unterdruck entsteht. Der Druckunterschied zwischen Druck- und Saugseite führt zu einem Auftrieb, der eine Drehung des Rotors bewirkt, die wiederum zum Antrieb eines elektrischen Strom erzeugenden Generators genutzt wird.

Voraussetzung für einen hohen Wirkungsgrad des Rotors und damit einen hohen Ertrag der Windkraftanlage ist eine möglichst ungestörte Umströmung des Profils senkrecht zur Achse des Rotorblattes über den gesamten Bereich der Rotorblätter. Bei bekannten Rotorblättern ist jedoch zu beobachten, daß die anliegende Luftströmung auf der Saugseite abreißt und ein Totwassergebiet entsteht, das den Auftrieb des Rotorblatts mindert und das Rotorblatt abbremst, indem es dessen Widerstand erhöht. Totwassergebiet bezeichnet üblicherweise den Bereich der abgelösten Strömung. Beide Faktoren mindern den Ertrag der Windkraftanlage.

Aus der GB 2374331 sind Flügel bekannt, die an ihrer Saugseite angeordnete Elemente aufweisen. Aufgabe dieser Elemente ist, die den Flügel in Anströmrichtung umfließende Strömung zu lenken. Hierzu weisen die auf dem Flügel angeordneten Elemente in Anströmrichtung gesehen eine konvexe Stirn und einen sich nach hinten verjüngenden Schwanz auf.

Die nachveröffentlichte RU 2218477 zeigt einen Flügel, der an mehreren Stellen im Bereich seines gesamten Umfanges von einem flächigen Element umgeben ist.

In der Regel erfolgt der Strömungsabriß in Strömungsrichtung gesehen jenseits der höchsten relativen Dicke des Profils. Betroffen sind davon in der Regel zumindest die blattwurzelnahen Bereiche.

Ein bekanntes Mittel, den Strömungsabriß zu reduzieren und so die Umströmung zu optimieren sind Vortexgeneratoren. Diese bestehen in der Regel aus Blechen, Stäben oder Profilen, die auf der Saugseite des Rotorbtatts angebracht sind und lokal begrenzte Turbulenzen erzeugen, die ein großflächiges Abreißen der Umströmung reduzieren. Solche Vortexgeneratoren sind z.B. aus der WO 0015961 bekannt. Nachteilig an den bekannten Vortexgeneratoren ist, daß sie den Ertrag der Windkraftanlage nur geringfügig verbessern, weil sie selbst Widerstand erzeugen und zudem laute Geräusche erzeugen.

Die Aufgabe der vorliegenden Erfindung ist, ein Rotorblatt für Windkraftanlagen zu schaffen, das gegenüber dem Stand der Technik deutlich verbesserte Umströmungseigenschaften aufweist. Diese Aufgabe wird durch die kennzeichnenden Merkmale des Anspruchs 1 gelöst.

Die unten ausführlich beschriebene Lösung dieser Aufgabe geht von der Erkenntnis aus, daß insbesondere im Bereich der Rotorwurzel auf der Saugseite des Profils störende Strömungen entstehen, die in Querrichtung des Rotorblatts zur Blattspitze hin verlaufen. Diese Querströmungen, welche im wesentlichen im Bereich der abgelösten Strömung auftreten, sind auf die aufgrund der unterschiedlichen Anströmgeschwindigkeiten bei unterschiedlichen Blattradien entstehenden Druckdifferenzen zurückzuführen, und werden besonders stark im Blattwurzelbereich induziert. Neben diesen Faktoren tragen auch die am Rotorblatt wirkenden Zentrifugalkräfte zum Entstehen dieser Querströmungen bei.

Durch die Querströmung wird die im Blattwurzelbereich des Rotorblatts vorhandene Ablösung aus der Umströmung des hier vorliegenden aerodynamisch ungünstigen Profils in Richtung der Blattspitze getragen, also in den Bereich aerodynamisch wirksamerer Profile. Überdies stört die Querströmung aber auch die wirksame an dem Rotorblatt anliegende Strömung, indem sie Turbulenzen erzeugt, die zu einem vorzeitigen Abriß dieser Strömungen führen.

Erfindungsgemäß ist daher ein Rotorblatt für eine Windkraftanlage mit einer Einrichtung zur Optimierung der Umströmung des Profils vorgesehen, die mehrere im Wesentlichen in Strömungsrichtung ausgerichtete, von der Saugseite abstehende flächige Elemente aufweist, die im Bereich der erwähnten auf der Saugseite des Profils von der Blattwurzel nach außen verlaufenden Querströmung in einem Bereich des Rotorblattes angeordnet sind, der sich von der Blattwurzel bis zur Hälfte der Länge des Rotorblatts, wobei die Höhe und Länge der Einrichtung so gewählt sind, daß die Einrichtung eine wirksame Reduktion dieser Querströmung bewirkt.

Durch die Reduktion der Querströmung durch die flächigen Elemente wird ein vorzeitiger Strömungsabriß auf der Saugseite des Rotorblatts verhindert. Eine solchermaßen verbesserte Umströmung führt zu einer erheblichen Steigerung des Ertrags einer entsprechend ausgerüsteten Windkraftanlage, ohne daß eine Zunahme des Betriebsgeräusches zu befürchtet ist.

Die erforderliche Höhe und Länge des jeweiligen flächigen Elements sowie dessen optimale Position auf der Saugseite des Rotorblatts variiert naturgemäß mit dem Abstand zur Drehachse des Rotors, der Profildicke, der Breite des Rotors, der überwiegend zu erwartenden Anströmgeschwindigkeit etc.

Die optimale Konfigurierung läßt sich am einfachsten empirisch ermitteln, z.B. indem man an dem Rotorblatt in verschiedenen Radiuspositionen Reihen von mit ihrem einen Ende an dem Blatt befestigten Wollfäden anordnet, und in Freilandversuchen anhand der Ausrichtung der freien Enden der Wollfäden die jeweils herrschenden Strömungsverhältnisse sichtbar macht. Auf diese Weise kann man relativ leicht den Effekt der erfindungsmäßen Elemente auf die Strömungsverhältnisse in unterschiedlichen Radiuspositionen testen, und so die optimale Anzahl und Position, ggf auch die Dimensionierung der erfindungsgemäßen flächigen Elemente ermitteln.

Zu Ermittlung der erforderlichen Höhe der flächigen Elemente können die Wollfäden ggf. zusätzlich auf unterschiedlich langen Abstandshaltern, in Form von z.B. Stäben angeordnet werden, um die Höhe des durch die Querströmung bewirkten Totwassergebiets und damit die Höhe der aufzuhaltenden Querströmung zu bestimmen.

Mit dieser Herangehensweise läßt sich empirisch die optimale Höhe und Länge der erfindungsgemäßen flächigen Elemente und/oder deren optimale Position auf einem gegebenen Rotorblatt ermitteln. In entsprechenden Versuchsreihen können so für beliebige Rotorblatt-Typen die optimalen Dimensionen und Positionen der erfindungsgemäßen flächigen Elemente gefunden werden.

Aus dem Flugzeugbau sind auf der Saugseite einer Tragfläche angeordnete, eine Querströmung verhindernde flächige Elemente seit längerem bekannt. Diese Elemente finden insbesondere bei Flugzeugen Verwendung, deren Tragflächen gepfeilt angeordnet sind. Hier stellt sich das Problem, daß aufgrund der schrägen Anordnung an der Tragflächenvorderkante ein Druckgradient entsteht, der die die Tragfläche umströmende Luft in Richtung der Trägflächenspitze ablenkt. Diese nicht abgelöste Querströmung stört wiederum die Umströmung der Tragfläche, und mindert damit den Auftrieb, da die Strömung entlang des Flügels aber nicht mehr darüber strömt. Um die Querströmung zu reduzieren, verwendet man daher an solchen Tragflächen senkrecht angeordnete Barrieren, die als Grenzschichtzäune bezeichnet werden.

Diese Grenzschichtzäune unterscheiden sich in wesentlichen Merkmalen von den hier erfindungsgemäß vorgestellten Elementen für Rotorblätter von Windkraftanlagen. Da die nicht abgelösten Querströmungen an gepfeilten Tragflächen vor allem im Bereich der Tragflächenvorderkante induziert worden, sind Grenzschichtzäune genau in diesem Bereich angeordnet Häufig erstrecken sie sich sogar um die Tragflächenvorderkante herum bis auf die Druckseite der Tragfläche.

Die erfindungsgemäßen flächigen Elemente für Rotorblätter von Windkraftanlagen reduzieren dagegen eine durch andere Phänomene hervorgerufene, bereits abgelöste Querströmung, die überwiegend im Bereich der größten Profildicke des Rotorblatts entsteht und im Bereich stromabwärts der größten Profildicke einen Strömungsabriß induziert. Eine Anordnung lediglich im Bereich der Vorderkante des Rotorblatts macht bei diesen Elementen keinen Sinn.

In einer bevorzugten Ausgestaltung der Erfindung ist vorgesehen, dass die flächigen Element mindestens im Bereich einer auf der Saugseite des Profils zwischen einem Bereich der größten relativen Dicke des Profils und der Hinterkante des Profils verlaufenden Querströmung angeordnet sind. Bei dieser Querströmung handelt es sich um die zuvor beschriebene Strömung, die durch die Differenz der Anströmgeschwindigkeiten zwischen blattwurzelnahen Bereichen und blattspitzennahen Bereichen und dem daraus resultierenden Druckgradienten auf der

Saugseite des Rotorblatts sowie durch die am Rotorblatt herrschenden Zentrifugalkräfte entsteht.

In einer besonders bevorzugten Ausgestaltung der Erfindung erstreckt sich das flächige Element über die ganze Breite der Saugseite des Rotorprofils. Dadurch wird sichergestellt, daß ein Übergreifen der Querströmung auf Gebiete mit gesunder Strömung verhindert werden kann, selbst ohne den exakten Verlauf der Querströmung auf der Saugseite des Rotorblatts zu kennen.

In einer weiteren bevorzugten Ausgestaltung der Erfindung ist das flächige Element so ausgebildet, daß es sich in seiner Längsausdehnung in gerader Richtung erstreckt. Dadurch werden durch das flächige Element auftretende Widerstandskräfte klein gehalten und die Lännentwicklung minimiert. In einer besonders bevorzugten Ausgestaltung erfolgt die Ausrichtung des flächigen Elements so, daß sie nicht mehr als 10° vom Verlauf der Tangente abweicht, die an dem Kreis mit dem, der Position des Elements entsprechenden Radius des Rotorblatts anliegt.

In einer weiteren bevorzugten Ausgestaltung ist das flächige Element so ausgebildet, daß es sich in Richtung seiner Längsausdehnung dem Drehverlauf des Radius folgend erstreckt, der dem Abstand des vorderen Endes des flächigen Elements zur Drehachse des Rotors entspricht. Diese Ausgestaltung stellt eine weitere Möglichkeit dar, die durch das flächige Element auftretenden Widerstandskräfte klein zu halten und die Lärmentwicklung zu minimieren.

Erfindungsgemäss ist vorgesehen, daß das Rotorblatt auf der Saugseite seines Profils mehrere flächige Elemente aufweist. Dies ist sinnvoll in Fällen, in denen hinter einem ersten erfindungsgemäßen Element erneut eine relevante Querströmung entsteht. Die optimale Positionierung und Dimensionierung dieser mehreren flächigen Element auf dem Rotorblatt kann wie oben beschrieben vorgenommen werden.

Erfindungsgemäss ist vorgesehen, daß die flächigen Elemente auf der Saugseite des Rotorblatts in einem Bereich angeordnet sind, der sich von der Blattwurzel bis zur Hälfte der Länge des Rotorblatts erstreckt. Besonders bevorzugt ist hierbei der Bereich, der sich von der Blattwurzel bis zu einem Drittel der Länge des Rotorblatts erstreckt.

In einer besonderes bevorzugten Ausgestaltung ist dabei vorgesehen, daß mindestens ein flächiges Element in einem Bereich angeordnet ist, der von der Blattwurzel aus jenseits eines Übergangsbereichs liegt, in dem das Profil der Blattwurzel in ein Auftrieb generierendes Profil übergeht, Ein solchermaßen angeordnetes Element ist z.B. geeignet, eine bereits bestehende, aus dem Bereich der Blattwurzel herangetragene Querströmung zu unterbrechen und so eine Störung der in diesem Bereich anliegenden laminaren Strömungen zu vermeiden.

In einer anderen bevorzugten Ausgestaltung ist vorgesehen, daß mindestens ein flächiges Element in einem Bereich angeordnet ist, der von der Blattwurzel aus diesseits eines Übergangsbereichs liegt, in dem das Profil der Blattwurzel in ein Auftrieb generierendes Profil übergeht Aufgrund der speziellen Verhältnisse bei Rotorblättern entsteht der wesentliche Teil der störenden Querströmung in diesem blattwurzelnahen Bereich, da das Rotorblatt hier, aufgrund der großen Profildicke, in der Regel kein strömungsgünstiges Profil aufweist. Das Vorsehen eines erfindungsgemäßen Elements in diesem Bereich verhindert daher besonders effektiv das Entstehen der Querströmung - im Gegensatz zu den zuvor beschriebenen Elementen, die so angeordnet sind, dass sie eine Fortpflanzung einer bereits bestehenden Querströmung in den Leistung erbringenden Bereich des Rotorblatts verhindem.

In einer weiteren bevorzugten Ausgestaltung der Erfindung ist vorgesehen, daß das flächige Element zumindest abschnittsweise luftdurchlässig ausgebildet ist, z.B. in Form eines Gitters oder durch im Element angeordnete Bohrungen. Eine flächiges Element mit einer solchen Ausgestaltung kann bei geeigneter Dimensionierung auftretende Querströmungen u.U. besser reduzieren als ein ununterbrochenes flächiges Element. Außerdem kann durch eine solche Ausgestaltung das Gewicht der flächigen Elemente reduziert werden.

In einer weiteren bevorzugten Ausgestaltung der Erfindung ist vorgesehen, daß das flächige Element aus Metall, wie beispielsweise Edelstahl oder Aluminium, aus Kunststoff, aus Verbundwerkstoffen, wie beispielsweise GFK oder CFK, oder einer Kombination dieser Materialien hergestellt ist. Eine solche Bauweise stellt sicher, daß das Element sowohl den Witterungsbedingungen als auch der mechanischen Beanspruchung unter Einsatzbedingungen standhält. Selbstverständlich können andere Materialien äquivalent verwendet werden, die den Anforderungen an Witterungsbeständigkeit und Stabilität genügen.

In den Zeichnungen ist die Erfindung beispielsweise und schematisch in einer bevorzugten Ausführungsform dargestellt. Es zeigen:
Fig. 1 die Aufsicht auf die Saugseite eines erfindungsgemäßen Rotorblatts einer Windkraftanlage,
Fig. 2a einen Schnitt gemäß Linie A - A in Fig. 1, und
Fig. 2b einen weiteren Schnitt gemäß Linie A - A in Fig. 1 in einer anderen Ausgestaltung.

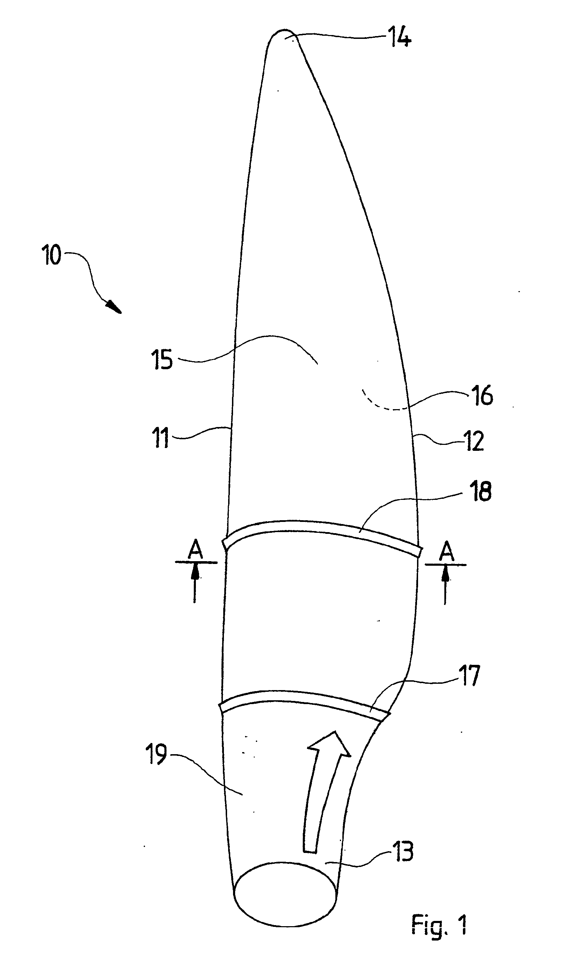

Fig. 1 zeigt ein Rotorblatt 10 mit einer Vorderkante 11, einer Hinterkante 12, einer Blattwurzel 13, einer Blattspitze 14, einer Saugseite 15 und einer Druckseite 16. Das Rotorblatt weist in seinem Verlauf eine von der Blatiwurzel 13 nach außen zur Blattspitze 14 abnehmende relative Dicke auf. Die Vorderkante 11 weist in Drehrichtung des Rotorblattes. Auf der Saugseite 15 sind in Strömungsrichtung angeordnete flächige Elemente 17 und 18 angebracht, die eine Qucrströmung auf der Saugseite 15 unterbinden und so einen vorzeitigen Strömungsabriß verhindern. Ein Übergangsbereich 19 ist dadurch gekennzeichnet, daß hier das zylindrische Profil der Blattwurzel 13 in ein tropfenförmiges, Auftrieb generierendes Profil übergeht. Die Querströmung ist durch einen Pfeil angedeutet.

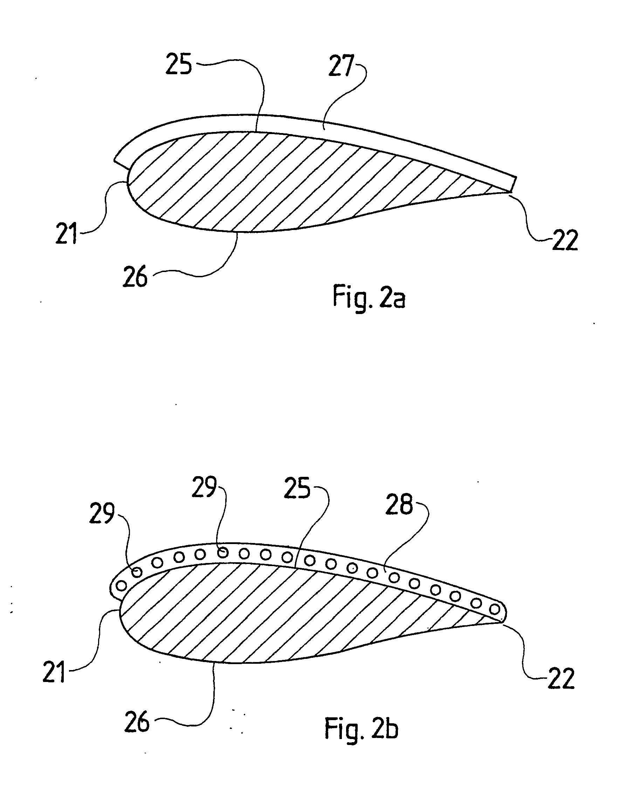

Fig. 2a zeigt einen Schnitt durch das Rotorblatt gemäß Linie A - A in Fig. 1 mit einer Vorderkante 21, einer Hinterkante 22, einer Saugseite 25 und einer Druckseite 26. Auf der Saugseite 25 ist das flächige Element 27 angeordnet, das sich von der Vorderkante 21 bis zur Hinterkante 22 und somit über die ganze Breite des Blattes erstreckt und eine Querströmung auf der Saugseite 25 unterbindet.

Fig. 2b zeigt einen weiteren Schnitt durch das Rotorblatt gemäß Linie A - A in Fig. 1 in einer anderen Ausgestaltung mit einer Vorderkante 21, einer Hinterkante 22, einer Saugseite 25 und einer Druckseite 26. Auf der Saugseite 25 ist das flächige Element 28 angeordnet, das sich von der Vorderkante 21 bis zur Hinterkante 22 erstreckt und abgerundete Kanten aufweist. Das flächige Elemente 28 weist Bohrungen 29 auf, die bei geeigneter Dimensionierung dazu beitragen, daß eine Querströmung auf der Saugseite 25 wirksam unterbunden wird.

## Patentansprüche

1. Rotorblatt für eine Windkraftanlage mit einem Profil, das in seinem Verlauf eine im wesentlichen von einer Blattwurzel nach außen zu einer Blattspitze abnehmende relative Dicke aufweist, wobei das Profil eine Vorderkante und eine Hinterkante sowie eine Saugseite und eine Druckseite aufweist und bei Anströmumg mit bewegter Luft auf der Saugseite gegenüber der Druckseite einen Unterdruck erzeugt, der zu einem Auftrieb führt, und wobei das Rotorblatt auf der Saugseite eine Einrichtung zur Optimierung der
Umströmung des Profils aufweist, **dadurch gekennzeichnet, dass** die Einrichtung mehrere im Wesentlichen in Strömungsrichtung ausgerichtete, von der Saugseite (15) abstehende flächige Elemente (17, 18) aufweist, die im Bereich einer auf der Saugseite (15) des Profils von der Blattwurzel (13) zur Blattspitze (14) verlaufenden Querströmung und nur in einem Bereich des Rotorblattes angeordnet sind, der sich von der Blattwurzel bis zur Hälfte der Länge des Rotorblatts erstreckt, wobei die Höhe und Länge der flächigen Elemente (17, 18) so gewählt sind, daß die Elemente (17, 18) eine wirksame Reduktion dieser Querströmung bewirken.

2. Rotorblatt gemäß Anspruch 1, **dadurch gekennzeichnet, dass** die flächigen Elemente mindestens im Bereich einer auf der Saugseite des Profils zwischen einem Bereich der größten relativen Dicke des Profils und der Hinterkante des Profils verlaufenden Querströmung angeordnet sind.

3. Rotorblatt gemäß einem der vorherigen Ansprüche, **dadurch gekennzeichnet, daß** sich die Länge der flächigen Elemente über die ganze Breite der Saugseite des Rotorprofils erstreckt.

4. Rotorblatt gemäß einem der vorherigen Ansprüche, **dadurch gekennzeichnet, daß** die flächigen Element in ihrer Längsausdehnung gerade ausgebildet sind.

5. Rotorblatt gemäß Anspruch 4, **dadurch gekennzeichnet, daß** die Ausrichtung der flächigen Elemente nicht mehr als 10 ° vom Verlauf der Tangente abweicht, die an dem Kreis mit dem, der Position des Elements entsprechenden Radius des Rotorblatts anliegt.

6. Rotorblatt gemäß einem der Ansprüche 1 - 3, **dadurch gekennzeichnet, daß** die flächigen Element so ausgebildet sind, daß sie sich in Richtung ihrer Längsausdehnung dem Drehverlauf des Radius folgend erstrecken, der dem Abstand der vorderen Enden des flächigen Elemente zur Drehachse des Rotors entspricht.

7. Rotorblatt gemäß Anspruch 1, **dadurch gekennzeichnet, daß** die flächigen Elemente auf der Saugseite des Rotorblatts in einem Bereich angeordnet sind, der sich von der Blattwurzel bis zu einem Drittel der Länge des Rotorblatts erstreckt.

8. Rotorblatt nach Anspruch 1, **dadurch gekennzeichnet, daß** mindestens ein flächiges Element in einem Bereich angeordnet ist, der von der Blattwurzel aus jenseits eines Übergangsbereichs liegt, in dem das Profil der Blattwurzel in ein Auftrieb generierendes Profil übergeht.

9. Rotorblatt nach Anspruch 1, **dadurch gekennzeichnet, daß** mindestens ein flächiges Element in einem Bereich angeordnet ist, der von der Blattwurzel aus diesseits eines Übergangsbereichs liegt, in dem das Profil der Blattwurzel in ein Auftrieb generierendes Profil übergeht.

10. Rotorblatt gemäß einem der vorherigen Ansprüche, **dadurch gekennzeichnet, daß** die flächigen Elemente zumindest abschnittsweise luftdurchlässig ausgebildet sind, z.B. in Form eines Gitters oder durch Bohrungen.

11. Rotorblatt gemäß einem der vorherigen Ansprüche, **dadurch gekennzeichnet, daß** die flächigen Elemente aus Metall, wie beispielsweise Edelstahl oder Aluminium, aus Kunststoff, aus Verbundwerkstoffen, wie beispielsweise GFK oder CFK, oder einer Kombination dieser Materialien hergestellt sind.

## Claims

1. A rotor blade for a wind turbine comprising a profile which, in its course, includes a relative thickness that, In essence, decreases from a blade root to a blade tip In an outward direction, wherein
the profile includes a front edge and a rear edge as well as a suction side and a discharge side and, when moving air is approaching, generates pressure on the suction side that is negative as compared with the discharge side, said negative pressure causing a lift, and wherein
the rotor blade Includes on the suction side a device for optimising the circulation around the profile,
**characterised in that**
- the device Includes a plurality of planar elements (17, 18) that are, In essence, oriented in flow direction and project from the suction side (15), said planar elements (17, 18) being arranged in the vicinity of a transverse flow extending on the suction side (15) of the profile from the blade root (13) to the blade tip (14) and being only arranged in such a region of the rotor blade that extends from the blade root to half the length of the rotor blade, wherein the height and the length of the planar elements (17, 18) are selected such that the elements (17, 18) bring about an effective reduction in this transverse flow.

2. The rotor blade according to Claim 1, **characterised in that** the planar elements are at least arranged In the vicinity of a transverse flow extending on the suction side of the profile between a region of the largest relative thickness of the profile and the rear edge of the profile.

3. The rotor blade according to any one of the preceding claims, **characterised In that** the length of the planar elements extends over the entire width of the suction side of the rotor profile.

4. The rotor blade according to any one of the preceding claims, **characterised In that** the planar elements are formed In a straight line along their longitudinal extension.

5. The rotor blade according to Claim 4, **charactarised in that** the orientation of the planar elements deviates from the course of the tangent which touches the circle with the radius of the rotor blade that corresponds to the position of the element by no more than 10°.

6. The rotor blade according to any one of Claims 1 to 3, **characterised In that** the planar elements are formed such that they extend in the direction of their longitudinal extension while following the rotating course of the radius which corresponds to the distance of the front ends of the planar elements from the axis of rotation of the rotor.

7. The rotor blade according to Claim 1, **characterised in that the** planar elements on the suction side of the rotor blade are arranged in a region that extends from the blade root to a third of the length of the rotor blade.

8. The rotor blade according to Claim 1, **charactarised in that** at least one planar element is arranged In a region that, as seen from the blade root, is disposed on the other side of a transition region in which the profil**e** of the blade root passes Into a profile which generates a lift.

9. The rotor blade according to Claim 1, **characterised in that** at least one planar element is arranged in a region that, as seen from the blade root, is disposed on this side of a transition region in which the profile of the blade root passes into a profile which generates a lift.

10. The rotor blade according to any one of the preceding claims, **characterised in that,** at least In sections, the planar elements are designed such that they are permeable to air, e.g. in the form of a lattice or by means of holes.

11. The rotor blade according to any one of the preceding claims, **characterised in that** the planar elements are made of metal such as, for example, stainless steel or aluminium, of plastic, of composite materials such as, for example, GRP or CRP, or of a combination of these materials.

## Revendications

1. Pale de rotor d'éolienne dotée d'un profil présentant une épaisseur relative allant essentiellement en décroissant d'un pied de pale vers l'extérieur en direction du bout de pale, ce profil présentant un bord d'attaque et un bord de fuite ainsi qu'un extrados et un intrados et générant, lorsqu'il se trouve dans un courant d'air en mouvement, du côté de l'extrados une dépression par rapport à l'intrados, cette dépression produisant une portance, la pale de rotor présentant du côté de l'extrados un dispositif d'optimisation de l'écoulement autour du profil, **caractérisée en ce que** le dispositif présente plusieurs éléments plans (17, 18) essentiellement orientés dans le sens du courant et faisant saillie sur l'extrados (15), ces éléments étant agencés dans la zone d'un courant transversal allant du pied de pale (13) au bout de pale (14) sur l'extrados (15) du profil, et uniquement dans une partie de la pale de rotor s'étendant du pied de pale jusqu'à mi-longueur de la pale, la hauteur et la longueur des éléments plans (17, 18) étant choisies de façon telle que les éléments plans (17, 18) entraînent une réduction efficace de ce courant transversal.

2. Pale de rotor selon la revendication 1, **caractérisée en ce que** les éléments plans sont agencés au moins dans la zone d'un courant transversal s'écoulant sur l'extrados du profil entre une région du profil présentant la plus grande épaisseur relative et le bord de fuite du profil.

3. Pale de rotor selon l'une des revendications précédentes, **caractérisée en ce que** la longueur des éléments plans s'étend sur toute la largeur de l'extrados du profil du rotor.

4. Pale de rotor selon l'une des revendications précédentes, **caractérisée en ce que** les éléments plans sont rectilignes dans le sens de leur extension longitudinale.

5. Pale de rotor selon la revendication 4, **caractérisée en ce que** les éléments plans ne s'écartent pas plus de 10° de la tangente du cercle de rayon correspondant à la position de l'élément sur la pale de rotor.

6. Pale de rotor selon l'une des revendications 1 à 3, **caractérisée en ce que** les éléments plans sont de forme longitudinalement incurvée selon le rayon correspondant à la distance entre l'extrémité avant des éléments plans et l'axe de rotation du rotor.

7. Pale de rotor selon la revendication 1, **caractérisée en ce que** les éléments plans sont agencés sur l'extrados de la pale de rotor dans une zone qui s'étend du pied de pale jusqu'au tiers de la longueur de la pale de rotor.

8. Pale de rotor selon la revendication 1, **caratérisée en ce qu'**au moins un élément plan est agencé dans une zone qui, partant du pied de pale, se trouve au-delà d'une zone de transition, dans laquelle le profil du pied de pale se transforme en un profil générant une portance.

9. Pale de rotor selon la revendication 1, **caractérisée en ce qu'**au moins un élément plan est agencé dans une zone qui, partant du pied de pale, se trouve en deçà d'une zone de transition, dans laquelle le profil du pied de pale se transforme en un profil générant une portance.

10. Pale de rotor selon l'une des revendications précédentes, **caractérisée en ce que** les éléments plans sont au moins partiellement conformés de façon à laisser passer l'air, par ex. par une grille ou des alésages ou des perforations,

11. Pale de rotor selon l'une des revendication précédentes, **caractérisée en ce que** les éléments plans sont réalisés en métal, par exemple en acier inoxydable ou en aluminium, en matière plastique, en matériaux composites, par exemple en matière plastique renforcée de fibres de verre ou de carbone, ou en une combinaison de ces matériaux.
